# EUROPÄISCHE PATENTANMELDUNG

(11) **EP 2 801 884 A2**
(43) Veröffentlichungstag der Anmeldung: **12.11.2014**
(21) Anmeldenummer: 14001555.3
(22) Anmeldetag: 02.05.2014
(51) Int. Cl.: G05D 23/19

(54) **Automatische Regelung von Kochprozessen**

(30) Priorität: 08.05.2013 CH 932132013
(71) Anmelder: V-Zug AG, 6301 Zug (CH)
(72) Erfinder: Rebsamen, Roland, 9470 Buchs (CH)
(74) Vertreter: Mirza, Akram Karim

(57) **Zusammenfassung**

Es wird ein Kochfeld (10) mit zwei oder mehr Sensoren (12) zur Erfassung einer sich im Kochfeld ausbreitenden Welle beschrieben, wobei die Sensoren (12) mit einer Kochfeldsteuerung (16) verbunden sind, die zum Auffinden eines für einen Kochvorgang an einer Stelle des Kochfelds kennzeichnenden Signalverlaufs Signale von mindestens zwei Sensoren (12) in einem signalverarbeitenden Prozess verknüpft.

## Beschreibung

### Gebiet der Erfindung

Die Erfindung betrifft ein Regelsystem und Verfahren zum Regeln von Kochprozessen auf flächigen Kochfeldern, insbesondere Glaskeramikkochfeldern und dergleichen.

### Hintergrund

Es ist bekannt, Kochprozesse mittels Körperschall zu überwachen und zu regeln. Beispielsweise wird in der deutschen Offenlegungsschrift DE 19701881 A1 eine Vorrichtung zur Erfassung der Schwingungen eines über einer Kochstelle geheizten Kochgeschirrs beschrieben mit einem Sensor zur Erfassung der Schwingungen sowie Mitteln zur Erfassung der Schwingungsfrequenzen.

Weiterhin sind Induktionskochfelder bekannt, zum Beispiel hergestellt und vertrieben von der V-Zug AG, mit einer Kochautomatik, welche beispielsweise Wasser mit erhöhter Leistung aufkocht und die Energiezufuhr nach Erreichen des Siedepunkts automatisch reduziert. Nach dem Sieden wird das Gargut bei einer gewählten Fortkochstufe gegart.

Die bekannten Verfahren haben jedoch zum einen Schwächen bei der korrekten und robusten Erkennung des Siedens in einem Kochgerät, besonders im gleichzeitigen Kochbetrieb mit mehreren Töpfen oder Pfannen, oder lassen sich wie beim Induktionsherd messprinzipbedingt nicht bei allen Kochvorgängen gleichermassen anwenden.

Es besteht daher die Aufgabe, die bestehenden Geräte und Verfahren zur Erkennung des Siedepunkts so zu gestalten, dass sie sich über einen weiten Anwendungsbereich einsetzen lassen.

### Darstellung der Erfindung

Gemäss der vorliegenden Erfindung wird ein Kochfeld mit zwei oder mehr Sensoren zur Erfassung einer sich im Kochfeld ausbreitenden Welle bereitgestellt, wobei die Sensoren mit einer Kochfeldsteuerung verbunden sind, die zum Auffinden eines für einen Kochvorgang an einer Stelle des Kochfeldes kennzeichnenden Signalverlaufs Signale von mindestens zwei der Sensoren zur Erfassung einer sich im Kochfeld ausbreitenden Welle verknüpft.

Die Sensoren können dabei entweder nahe an Kochstellen auf dem Kochfeld, oder gleichförmig oder assymmetrisch über das Kochfeld verteilt, oder am Rande des Kochfelds angebracht sein.

Die Welle kann eine Schallwelle sein, die sich entweder entlang einer Oberfläche des Kochfelds oder in der Kochfeldplatte ausbreitet. Als Sensoren eignen sich Aufnehmer von Schwingungen, insbesondere elektromagnetische Schwingungssensoren, optische Schwingungssensoren oder piezoelektrische Sensoren. Die Sensoren können auf herkömmliche Weise oder als mikromechanische (MEMS) Sensoren hergestellt sein.

Die Kochfeldsteuerung kann einen Mikroprozessor oder ein ähnliches Gerät zur Signalverarbeitung aufweisen sowie einen Speicher zur Speicherung von Signalen oder bereits prozessierten Signalen der Sensoren.

Die Verknüpfung von Signalen von mindestens zwei Sensoren umfasst signalverarbeitende Schritte und kann zum Beispiel eine (zeitversetzte) mathematische Verknüpfung als Summation oder Multiplikation von Teilen der Signale enthalten, eine Auswertung der Laufzeitdifferenz zwischen den Signalen, eine Korrelation, welche ein Mass für die Ähnlichkeit zweier Signale liefert, oder ein Filtern, bei dem die Signale auf das Vorhandensein eines spezielles Signalverlaufs oder Signatur abgesucht werden oder ein Signal eines Filters, welches auf abgelegten Signalverläufen abstützt. Diese(r) Signalverlauf oder Signatur kann zum Beispiel ein Amplitudenanstieg in einem Frequenzbereich sein und einen Siedevorgang auf einer Kochstelle charakterisieren.

Mit dem Signal oder Signalverlauf sind in dieser Anmeldung auch gefilterte oder transformierte Signale oder digitale Datensätze gemeint, die sich auf übliche oder bekannte Weise aus den Signalen wie vom Sensor gemessen ableiten lassen.

In einer bevorzugten Variante der Erfindung ist die Steuerung dazu ausgelegt, Laufzeitbestimmungen mit den Signalen der Sensoren vorzunehmen. Dazu kann die Steuerung Signale mit einer Abtastrate von mindestens 10kHz aufnehmen, vorzugsweise mindestens 20 KHz.

Die Steuerung ist weiter bevorzugterweise darauf ausgelegt, bei der Verküpfung der Signale Ausbreitungseffekte der Signale zu korrigieren. Diese Ausbreitungseffekte können beispielsweise dispersive Effekte der Wellenausbreitung sein, welche für die Kochfelddimensionen und das Material des Kochfelds im Prinzip bekannt sind und somit modelliert werden können.

Da bei den Kochfeldern die Lage der Heizplatten bekannt sind, reichen für viele Anwendung zwei Sensoren aus, um zum einen das charakteristische Signal für den zu überwachenden Vorgang, also beispielsweise ein sprudelndes Kochen, und die Heizplatte, auf der der Vorgang geschieht, zu identifizieren. Um das Verfahren jedoch robuster zu gestalten und auf eindeutige Weise verschiedene Kochszenarien zu unterscheiden, sind Anordnungen mit drei oder vier oder mehr Sensoren bevorzugt.

Zusätzlich zu den Sensoren zur Messung der Wellenausbreitung können auch ein oder mehrere Temperatursensoren im Kochfeld angebracht sein, um Temperaturmessungen bei der Auswertung der Signale der Schwingungssensoren zu verwenden.

Die Erfindung betrifft auch ein Verfahren zur Steuerung eines Kochfelds mit zwei oder mehr Sensoren zur Erfassung einer sich im Kochfeld ausbreitenden Welle, wobei Signale von mindestens zwei der Sensoren verknüpft und beispielsweise einer Position auf dem Kochfeld zugeordnet werden.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
FIG. 1 zeigt ein Kochfeld mit vier Kochstellen und Sensoren;
FIG. 2 zeigt einen am Kochfeld angebrachten Schwingungssensor;
FIG. 3A zeigt ein Kochfeld mit fünf Sensoren;
FIG. 3B zeigt ein Kochfeld mit vier am Umfang angebrachten Sensoren;
FIG. 4A zeigt ein Signal beim Einsetzen des Siedens auf einem Glaskeramikkochfeld;
FIG. 4B zeigt ein Signal beim Einsetzen des Siedens auf einem Induktionskochfeld;
FIG. 5A zeigt eine Signalverschiebung zweier Sensoren mit einer Laufzeitdifferenz entsprechend 20cm; und
FIG. 5B zeigt schematisch den Signalverlauf eines Kochereignisses für drei räumlich getrennte Sensoren.

### Wege zur Ausführung der Erfindung

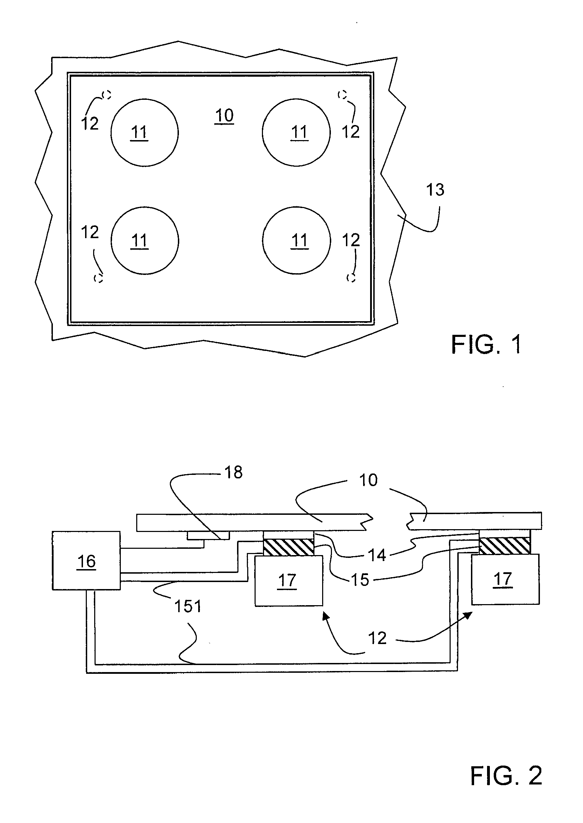

Eine schematische Darstellung eines Kochfelds wird in FIG. 1 gezeigt. Das Kochfeld 10 hat vier Kochstellen 11 und vier Sensoren 12. Das Kochfeld ist typischerweise als einteilige Platte ausgebildet. Das Kochfeld kann beispielsweise eine Platte aus Glaskeramik sein, wie sie bei der Herstellung von Elektroherden und Induktionsherden üblicherweise Verwendung finden. Die Kochstellen 11 können zum Beispiel durch Widerstands-, Halogen- oder Induktionsheizung erhitzt werden. Das Kochfeld kann auch aus einem anderen Material, wie zum Beispiel Metall, gefertigt sein. Unter der Voraussetzung, dass eine Wellenausbreitung nicht verhindert wird, kann die Platte auch aus mehreren, miteinander verbundenen Segmenten bestehen. Das Kochfeld 10 ist in eine grössere Arbeitsfläche 13 eingesetzt.

Ein schematischer Querschnitt durch zwei Sensoren 12 im Kochfeld 10 ist in FIG. 2 gezeigt. In dem Beispiel sind die Sensoren an der Unterseite des Kochfelds 10 befestigt. Die Sensoren sind in diesem Beispiel in einer mechanischen Verbindung mit dem Kochfeld 10, so dass sich Schwingungen des Kochfelds auf sie ohne grosse Dämpfung übertragen. In dem gezeigten Beispiel umfasst die mechanische Verbindung eine Klebeschicht 14. In Abhängigkeit vom Messprinzip des verwendeten Sensors kann ein Sensor auch nur teilweise, wie z.B. bei Gebrauch eines kapazitiven Sensors, oder, wie zum Beispiel beim Gebrauch einer optischen Abtastung mittels beispielsweise Laserinterferometrie, gar nicht mit dem Kochfeld verbunden sein.

Die Sensoren 12 in FIG. 2 weisen als Wandler jeweils eine piezoelektrische Schicht 15 auf, die mechanische Schwingungen in ein elektrisches Signal umwandeln. Die elektrischen Signale von beiden Sensoren 12 werden über die Leitungen 151 an eine Steuerung 16 zur Auswertung weitergeleitet. Der vorliegende Sensor 12 weist noch eine Zusatzmasse 17 auf, die die Wirkung der mechanischen Schwingungen auf die piezoelektrische Schicht 15 verstärkt. Die Resonanzfrequenz des schwingenden Systems des Sensors ist in Nähe des Frequenzbereichs des Nutzsignals gewählt. Im vorliegenden Beispiel besitzt der Sensor eine Resonanzfrequenz im Bereich von 800 Hz.

Die Steuerung 16 umfasst eine Verstärkerschaltung, einen Analog/Digitalwandler und eine Filterschaltung. Die Filterschaltung besteht in dem vorliegenden Beispiel aus einem analogen Bandpassfilter mit einer unteren Grenze im Bereich von 300 Hz und einer oberen Grenze im Bereich von 3000 Hz und aus einem digitalen Bandpassfilter mit einer unteren Grenze im Bereich von 500 Hz und einer oberen Grenze im Bereich von 1500 Hz. Die Signale von beiden Sensoren 12 werden in gleicher Weise gefiltert, bevor sie verknüpft werden. Mögliche Weisen, die Signale zu verknüpfen, sind weiter unten beschrieben.

Die Steuerung 16 ist zusätzlich auch mit einem oder mehreren Temperatursensor(en) 18 verbunden. Die Temperatursensoren sind dabei zweckmässigerweise nahe an den eigentlichen Kochstellen 11 angebracht, um den Temperaturverlauf an den jeweiligen Kochstellen genau registrieren zu können.

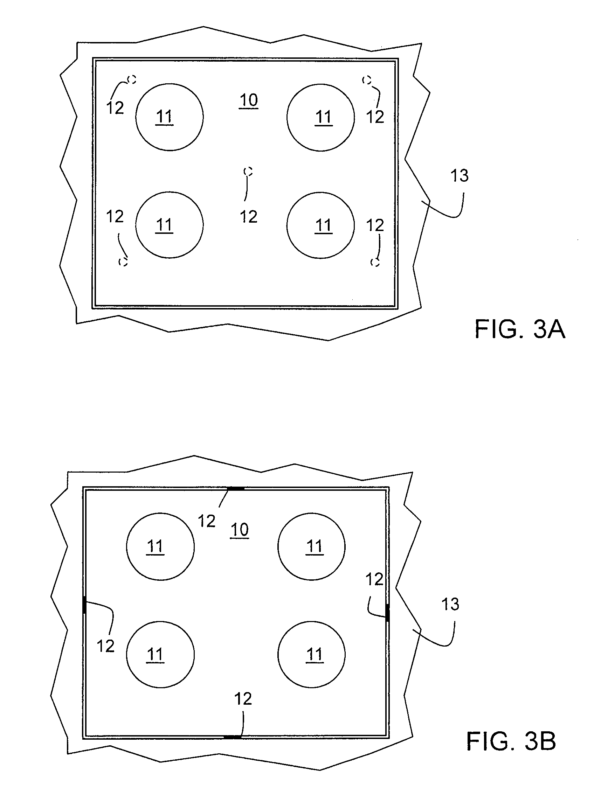

Die Anordnung der Sensoren gemäss FIG. 1A kann in Bezug auf die Verteilung der Kochstellen 11 und Geometrie des Kochfelds 10 variiert werden. So kann es im Hinblick auf das im Folgenden beschriebene Verfahren vorteilhaft sein, Sensoren 12, wie in FIG. 3A gezeigt, an einer zentralen Stelle des Kochfelds 10 anzubringen.

Im Hinblick auf eine raumsparende Ausführung wird es als Vorteil der vorliegenden Erfindung gesehen, dass sich die Sensoren nicht mehr unbedingt in der unmittelbaren Nähe der Kochstellen befinden müssen. So ist ebenfalls das Anbringen eines oder mehrerer der Sensoren 12 am Rand des Kochfelds 10 möglich, wie dies in FIG. 3B gezeigt ist.

Sofern die vom Messprinzip abhängige Kopplung zwischen den Sensoren und des Kochfelds bestehen bleibt, kann die Lage der Sensoren in einem weiten Umfang so gewählt werden, dass ein Kompromiss zwischen leichter Montage und sicherer Messwerterfassung erzielt wird.

In alternativen Ausführungsformen können Sensoren mit verschiedenen Messprinzipien oder mit verschiedenen Kopplungen an das Kochfeld in einem System verwendet werden. Weiterhin muss die Lage der Sensoren nicht der Symmetrie des Kochfelds oder der Lage der Kochstellen folgen und die Sensoren können in diesem Sinne unsymmetrisch verteilt angeordnet sein.

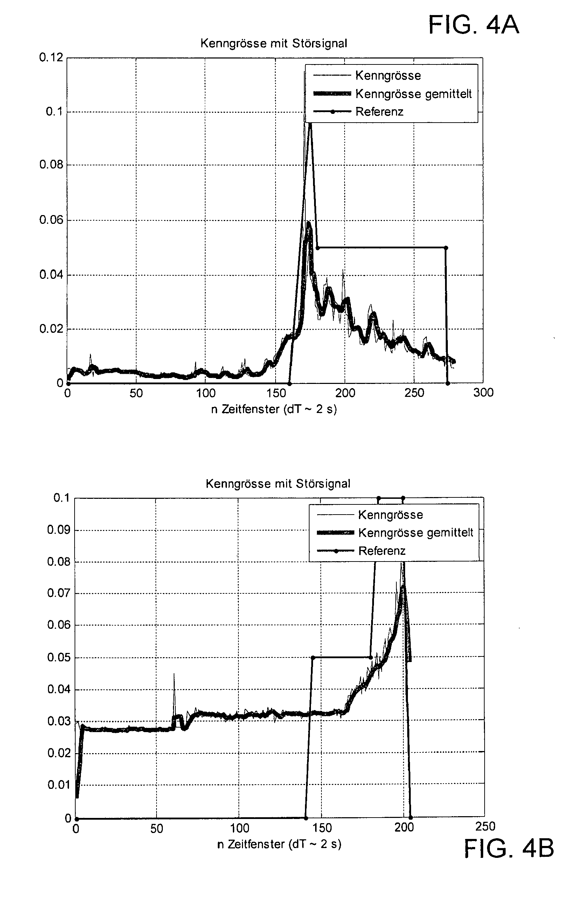

In der Anwendung des oben beschriebenen Systems oder ähnlicher Systeme werden zunächst die Signale der Sensoren 12 an die Steuerung 16 weitergeleitet. Aus dem oder den Rohsignal(en) wird dann durch Signalverarbeitungsschritte ein(e) für einen Kochvorgang charakteristisches Signal oder Signatur identifiziert. In den Figuren 4A und 4B sind beispielsweise Signale gezeigt, die während eines Siedevorgangs auftreten können. Die Signale werden analog und digital gefiltert, gleichgerichtet und über ein Zeitfenster von 0.25s gemittelt.

In FIG. 4A wird ein an einem Elektroherd gemessenes Signal dargestellt. Der Siedevorgang ist durch einen steilen Anstieg des Signals nach dem Zeitfenster 150 gekennzeichnet. In FIG. 4B wird ein an einem Induktionsherd gemessenes Signal dargestellt. Der Siedevorgang ist durch einen gegenüber dem Signal von FIG. 4A reduzierten Anstieg des Signals ebenfalls nach dem Zeitfenster 150 gekennzeichnet.

Diese typischen Signaturen eines Kochvorgangs lassen sich nicht nur mit dem der betreffenden Kochstelle nächstliegenden Sensor messen, sondern tauchen in teilweise sogar deutlicherer Form im Signalverlauf von weiter entfernteren Sensoren auf.

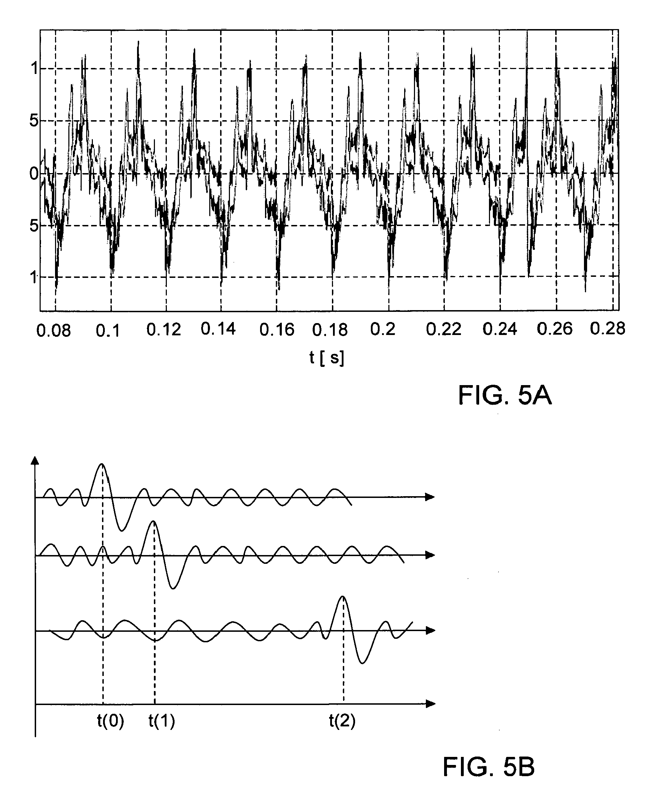

In FIG. 5A ist der Signalverlauf an zwei Sensoren im Abstand von 20cm dargestellt. Der Signalverlauf ist mit einer Abtastrate von 10 kHz aufgenommen und lässt eine deutliche Trennung beider Signale zu.

Während diese Form der Querbeeinflussung im Betrieb mit einem einzigen, einer bestimmten Kochstelle zugeordneten Sensor eine Störung der Messung darstellt, können durch die simultane Erfassung der Wellen im Kochfeld an verschiedenen Punkten robustere Messungen und Aussagen über einen Kochvorgang an einer Kochstelle oder gleichzeitig an mehreren Kochstellen getroffen werden.

Dabei kann für die Wellenausbreitung angenommen werden, dass die Ausbreitungsgeschwindigkeit c eine Konstante ist. Für Körperschall, der sich in einer Glaskeramikplatte ausbreitet, beträgt diese beispielsweise etwa 3000m/s. Eine Kochstelle, oder im Allgemeinen jeder Punkt auf dem Kochfeld, hat eine feste Distanz r zu jedem der Sensoren. Die Differenz der Distanzen Δr ist für jeden Punkt ebenfalls konstant. Ein Ereignis, welches sich z.B. als eine Amplitudenänderung der Schallwelle ausbreite, trifft zu einem Zeitpunkt t(0) an dem dem Ursprung des Ereignis nächstliegenden Sensor ein und zu einer festen Zeit Δt(i) = Δr(i)/c an einem weiter entfernt liegenden Sensor i. In Abhängigkeit von der Zahl und Lage der Kochstellen und der Zahl und Lage der Sensoren kann somit jedem Sensor ein Zeitfenster Δt(i) zugeordnet werden, welches für jede der Kochstellen eindeutig ist.

Wie im Beispiel von FIG. 5B gezeigt, wird ein Ereignis von einer Kochstelle, welches zu einem Zeitpunkt t(0) am ersten Sensor eintrifft, zu bekannten Zeiten an den anderen Sensoren eintreffen. In dem Beispiel von FIG. 5B sind schematische Signale von drei Sensoren untereinander aufgetragen und eine Amplitudenänderung, die zum Zeitpunkt t(0) am ersten Sensor registriert wird, trifft zu mit Hilfe der obigen Beziehung berechenbaren Zeiten t(1) und t(2) an dem zweiten bzw. dritten Sensor ein.

Aus diesen Beziehungen lassen sich bereits mit zwei Sensoren Filter einrichten, die den Rauschabstand verbessern, sofern jeder Kochstelle ein eindeutiges Δt(i) zugeordnet werden kann. Ein solches Filter kann beispielsweise Signale eines Sensors mit um Δt(i) verschobenen Signalen des zweiten Sensors überlagern, wobei sich Signale, die an der Kochstelle entstanden sind, kohärent überlagern. Signale, die nicht diesen definierten Zeitverschiebungen unterliegen, stammen offensichtlich von Störungen an anderen Stellen des Kochfelds und können verworfen werden, bzw. führen zu keiner Verstärkung des Signals.

Bei der Signalauswertung können bekannte Phasen-, Abschwächungs- oder Dispersionseffekte der sich ausbreitenden Welle berücksichtigt werden. Eventuell störende Reflexionen des Signals an Trennflächen wie z.B. dem Rand des Kochfelds können entweder mechanisch durch eine geeignete Dämpfung, rein elektronisch durch Signalverarbeitung oder durch beide Verfahren unterdrückt werden.

Auf ähnliche Weise lässt sich mittels Trilateration mit mindestens drei Sensoren auch der Ursprung einer Signatur auf einem beliebigen Punkt des Kochfelds bestimmen.

Durch die Verwendung eines Temperatursensors wie dem Sensor 17 in FIG. 2 lassen sich die Wellensignale auch mit dem Wärmefluss in ein Kochgefäss korrelieren und zur Verbesserung des Messergebnisses heranziehen.

Wird auf die oben beschriebene Weise ein Kochvorgang an seiner charakteristischen Signatur erkannt, kann die Steuerung einen entsprechend vorprogrammierten Schritt anwählen. Nach dem Erkennen eines Siedens kann dieser Schritt eine Reduktion der Leistung an der entsprechenden Kochstelle beinhalten oder ein erkanntes Überkochen kann zu einer automatischen Abschaltung der betreffenden Kochstelle führen.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Kochfeld (10) gekoppelt mit zwei oder mehr Sensoren (12) zur Erfassung einer sich im Kochfeld ausbreitenden Welle, wobei die Sensoren (12) mit einer Kochfeldsteuerung (16) verbunden sind, die zum Auffinden eines für einen Kochvorgang an einer Stelle des Kochfelds (10) kennzeichnenden Signalverlaufs Signale von mindestens einem ersten der Sensoren (12) mit Signalen eines zweiten der Sensoren (12) verknüpft.

2. Kochfeld (10) nach Anspruch 1, wobei die Steuerung (16) die Signale in einem signalverarbeitenden Prozess verknüpft.

3. Kochfeld (10) nach Anspruch 1 oder 2, wobei die Steuerung (16) Laufzeitdifferenzen zwischen Positionen auf dem Kochfeld (10) und Positionen der Sensoren (12) benutzt.

4. Kochfeld (10) nach einem der Ansprüche 1 bis 3, wobei mindestens einer der Sensoren (12) an der Unterseite des Kochfelds (10) angebracht ist.

5. Kochfeld (10) nach einem der Ansprüche 1 bis 4, wobei mindestens einer der Sensoren (12) am Rande des Kochfelds (10) angebracht ist.

6. Kochfeld (10) nach einem der vorangehenden Ansprüche, wobei die Sensoren (12) piezoelektrische Signalwandler (15) umfassen.

7. Kochfeld (10) nach einem der vorangehenden Ansprüche, wobei die Steuerung (16) die Signale mit einer Abtastrate von mindestens 10KHz aufnimmt.

8. Kochfeld (10) nach einem der vorangehenden Ansprüche, mit drei oder mehr Sensoren (12), wobei die Kochfeldsteuerung (16) zum Auffinden eines für einen Kochvorgang an einer Stelle des Kochfelds (10) kennzeichnenden Signalverlaufs Signale von mindestens drei der Sensoren (12) verknüpft.

9. Kochfeld (10) nach einem der vorangehenden Ansprüche, wobei das Kochfeld (10) eine Platte aus Glaskeramik ist.

10. Verfahren zur Steuerung eines Kochfelds (10), wobei die Signale von zwei oder mehr Sensoren (12) zur Erfassung einer sich im Kochfeld ausbreitenden Welle aufgenommen werden und zum Auffinden eines für einen Kochvorgang an einer Stelle des Kochfelds (10) kennzeichnenden Signalverlaufs Signale von mindestens zwei der Sensoren (12) verknüpft werden.

11. Verfahren nach Anspruch 10, wobei die Verknüpfung signalverarbeitende Schritte umfasst.

12. Verfahren nach Anspruch 10 oder 11, wobei Laufzeitdifferenzen zwischen Positionen auf dem Kochfeld (10)und Positionen der Sensoren (12) berücksichtigt werden.

13. Verfahren nach einem der Ansprüche 10 bis 12, wobei Signale von zwei oder mehr Sensoren (12) kohärent überlagert werden.

14. Verfahren nach einem der Ansprüche 10 bis 13, wobei der Kochvorgang das Sieden in einem auf dem Kochfeld (10) erhitzten Behälter ist.
